# FASCICULE DE BREVET EUROPEEN

(11) **EP 3 182 614 B1**
(45) Date de publication et mention de la délivrance du brevet: **23.10.2019**
(21) Numéro de dépôt: 16203994.5
(22) Date de dépôt: 14.12.2016
(51) Int. Cl.: H04B 7/204

(54) **PROCEDE DE COMMUNICATION PAR SATELLITE A REPARTITION DE CAPACITE FLEXIBLE A BASE DE SAUT DE FAISCEAUX ET DE SCHEMA DE REUTILISATION FRACTIONNAIRE**
KOMMUNIKATIONSVERFAHREN ÜBER SATELLIT MIT FLEXIBLER VERTEILUNGSKAPAZITÄT DURCH STRAHLENBÜNDEL-SPRUNG UND SCHEMA EINER FRAKTIONÄREN WIEDERVERWENDUNG
METHOD FOR SATELLITE COMMUNICATION WITH BEAM-HOPPING FLEXIBLE CAPACITY DISTRIBUTION AND FRACTIONAL RE-USE PATTERN

(30) Priorité: 18.12.2015 FR 1502635
(43) Date de publication de la demande: 21.06.2017
(73) Titulaire: Thales, 92400 Courbevoie (FR)
(72) Inventeur: CORBEL, Erwan, 31100 TOULOUSE (FR); CHARRAT, Bernard, 31100 TOULOUSE (FR)
(74) Mandataire: Priori, Enrico

(56) Documents cités:
- EP-A2- 0 536 033
- US-A1- 2012 164 941
- US-A1- 2013 009 809
- US-A9- 2014 286 236
- US-B1- 6 377 561

## Description

L'invention se situe dans le domaine des systèmes de communications par satellite de haute capacité, et porte plus particulièrement sur un procédé flexible d'attribution des ressources spectrales au sein d'un tel système.

Elle s'applique en particulier aux systèmes de communications satellite de type HTS (acronyme anglais pour High-Throughput Satellite), qui ont pour but d'offrir un accès large bande à des terminaux fixes (résidentiels ou professionnels) ou mobiles (professionnels, comme par exemple les avions).

L'augmentation du trafic et de la taille des contenus transportés dans les réseaux de communication satellitaires entraine une augmentation de la charge sur ces réseaux.

Pour répondre à cette augmentation de charge, il est nécessaire de mettre en oeuvre des techniques efficaces d'allocation des ressources au sein des réseaux satellitaires, afin d'augmenter la capacité de ces réseaux, mais également de leur apporter de la flexibilité, en allouant les ressources dont ils disposent aux endroits où elles sont le plus requises.

Afin d'augmenter la capacité globale d'un réseau de communications par satellites, il est classique de découper la zone géographique couverte par le réseau en une pluralité de sous-zones de tailles inférieures, appelées spots satellitaires, éclairées par un faisceau du satellite. La réunion de l'ensemble de ces spots forme la zone géographique de couverture, dans un système satellitaire multifaisceaux.

La découpe en faisceaux permet d'améliorer la capacité générale du réseau satellitaire. En effet, les antennes couvrant chacun des faisceaux étant plus directives, leur gain, et donc le bilan de liaison, est plus favorable, ce qui permet d'utiliser des schémas de modulation et de codage à plus forte efficacité spectrale. De plus, lorsque l'isolation spatiale entre les spots, en termes de gain d'antenne est suffisante, la même ressource spectrale peut être utilisée plusieurs fois au sein du réseau satellitaire.

Pour que les différents faisceaux n'interfèrent pas entre eux, les faisceaux les plus proches utilisent des fréquences distinctes, les faisceaux plus éloignés pouvant utiliser des mêmes fréquences.

La capacité générale du système satellitaire est donc un produit de la capacité de chaque faisceau et du nombre total de faisceaux, le nombre de faisceaux étant limité par la capacité de formation de faisceaux des antennes, la capacité d'emport de la charge utile et les interférences entre faisceaux, qui varient en fonction des diagrammes d'antennes, du schéma de réutilisation des fréquences et de la taille des spots.

Récemment, des architectures systèmes massivement multifaisceaux ont été proposées pour permettre à un satellite de communications d'atteindre des capacités supérieures à 150 Gbps. Ce sont des systèmes reposant sur l'utilisation de la bande Ka, au moins en ce qui concerne le demi-lien utilisateur (c'est-à-dire le lien entre la passerelle et le terminal utilisateur via le satellite). L'obtention d'une telle capacité repose sur des architectures charge utile optimisées, très efficaces en termes de capacité par unité de masse et de puissance.

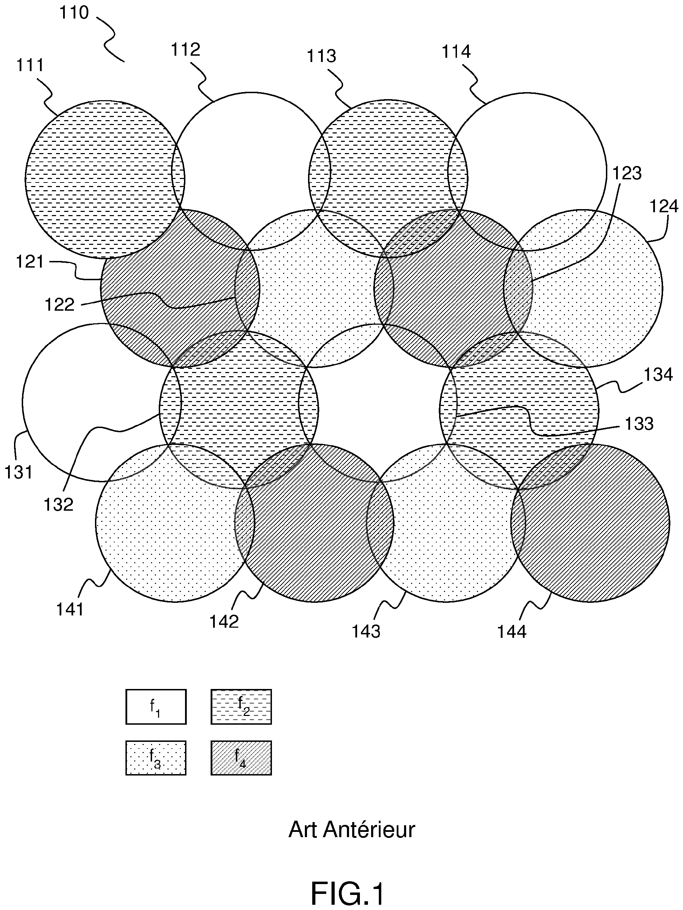

La figure 1 illustre le résultat d'un procédé de réutilisation des ressources selon l'état de l'art, dans lequel différentes ressources spectrales sont allouées, ou attribuées, à différents faisceaux et réutilisées de manière à minimiser les interférences entre les faisceaux utilisant les mêmes bandes. Dans l'exemple, la réutilisation se fait en utilisant un schéma à N = 4 couleurs.

Dans la figure 1, une zone géographique 110 est découpée en de multiples faisceaux 111 à 144. Dans l'exemple, la ressource fréquentielle totale attribuée à l'ensemble du réseau est divisée en quatre bandes de fréquences : f₁, f₂, f₃ et f₄.

Une bande de fréquences est attribuée à chacun des faisceaux, de sorte à maximiser l'écart entre deux faisceaux utilisant la même ressource fréquentielle. Dans l'exemple, le schéma de réutilisation des fréquences vaut N = 4, on parle alors de schéma de réutilisation à N couleurs. Dans ce schéma de réutilisation, une même ressource fréquentielle n'est jamais attribuée à deux faisceaux adjacents, mais peut être réutilisée par des faisceaux bi-adjacents. C'est le cas par exemple pour les faisceaux 112, 114, 131 et 133. Les ressources fréquentielles f₁, f₂, f₃ et f₄ peuvent correspondre chacune à un quart de la bande totale attribuée au réseau. Une autre mise en oeuvre consiste à allouer la moitié de la bande totale aux fréquences f₁ et f₂, et à utiliser les mêmes bandes de fréquences que f₁ et f₂ dans la polarisation orthogonale pour les bandes de fréquences f₃ et f₄.

On notera dans la figure 1 la présence de zones 151 d'intersections entre deux faisceaux satellitaires. Dans ces zones d'intersection, les ressources fréquentielles de plusieurs faisceaux sont reçues avec des niveaux de puissance comparables.

La plupart du temps, la même quantité de ressources spectrales est attribuée à chacun des faisceaux. Ils ne permettent alors pas d'offrir une répartition de la capacité non-uniforme sur la zone de service. Or, les analyses de la demande de capacité pour les systèmes futurs font apparaître de larges disparités géographiques, dont la répartition peut varier dans le temps en fonction du scénario d'évolution du marché considéré. La métrique pertinente dans cette situation n'est alors plus la capacité globale du système, mais la capacité pouvant réellement être valorisée.

Afin de répondre à cette disparité de la demande sur l'ensemble du réseau, il est donc souhaitable d'apporter de la flexibilité à la répartition de capacité. Ce besoin de flexibilité porte en priorité sur la voie aller (c'est-à-dire le lien depuis la passerelle vers le terminal utilisateur via le satellite).

Une manière de satisfaire les pics locaux de demande de capacité est d'augmenter la capacité de l'ensemble des faisceaux du système satellitaire. A cet effet, il est connu de l'homme du métier des méthodes dites de réutilisation fractionnaire des fréquences (en anglais Fractional Frequency Reuse, connu sous l'acronyme de FFR).

Le procédé de réutilisation fractionnaire des fréquences consiste à superposer deux schémas de réutilisation de fréquences. Une première ressource fréquentielle est attribuée à chacun des faisceaux selon un schéma de réutilisation des fréquences à N couleurs, comme dans le procédé illustré en figure 1 de réutilisation de fréquences, puis une deuxième ressource fréquentielle est attribuée à chacun des faisceaux, selon un schéma de réutilisation à P couleurs, P étant compris entre 1 et N. Les ressources fréquentielles associées aux deux schémas de couleurs sont distinctes. Les émissions dans les différents faisceaux se font alors en combinant l'utilisation des ressources associées au schéma à P couleurs et l'utilisation des ressources associées au schéma à N couleurs.

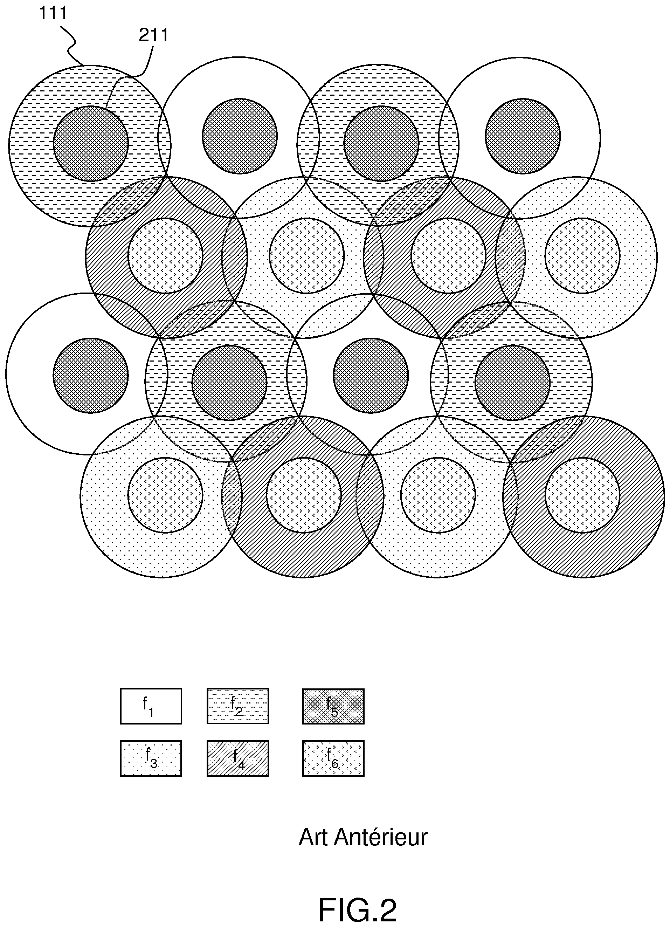

Dans le cas classique, P vaut 2, ou 1 lorsque l'on utilise la diversité de polarisation. Un mode de réalisation représenté dans la figure 2 utilisant la diversité de polarisation, et dans lequel N = 4 et P = 2, consiste à diviser la bande de fréquence en trois sous bandes f₁, f₂ et f₅, les bandes de fréquences associées au schéma à N couleurs étant alors les sous bandes f₁, f₂, ainsi que les sous bandes f₃ et f₄, identiques à f₁ et f₂ mais dans la polarisation orthogonale. Les bandes de fréquences associées au schéma de réutilisation à P = 2 couleurs utilisent alors la sous bande f₅, et la sous bande f₆ identique à f₅ mais en polarisation orthogonale.

Dans chaque faisceau, l'utilisation de la ressource fréquentielle attribuée selon le schéma à P couleurs est réservée aux terminaux pour qui les interférences générées par l'utilisation simultanée de ces ressources au sein d'autres faisceaux auxquels elles sont attribuées ne vient pas perturber les communications. L'identification des terminaux éligibles à l'utilisation de cette ressource fréquentielle se fait généralement à partir de la position géographique du terminal, les terminaux situés au centre du spot satellitaire étant les plus susceptibles d'être robustes aux interférences, de par la directivité des antennes utilisées pour chaque faisceau.

Ces terminaux peuvent alors utiliser les premières et deuxièmes ressources fréquentielles attribuées au faisceau auquel ils appartiennent. Les autres terminaux, moins robustes aux interférences, n'utilisent que les ressources fréquentielles associées au schéma de réutilisation des fréquences à N couleurs. La capacité globale du réseau est alors augmentée, de par l'utilisation des deuxièmes ressources fréquentielles.

L'augmentation de capacité du réseau est liée à la taille de la zone comprenant les terminaux pouvant utiliser la deuxième ressource fréquentielle. Cette taille dépend des paramètres de transmission du système, elle doit représenter une portion significative du spot afin d'augmenter la capacité pour ce faisceau, mais être limitée pour ne pas augmenter la quantité d'interférences générées entre les faisceaux.

La figure 2 illustre la mise en oeuvre d'un tel procédé de réutilisation fractionnaire des fréquences, dans lequel un premier schéma de réutilisation à N = 4 couleurs est utilisé conjointement à un schéma de réutilisation à P = 2 couleurs. Dans ce mode de réalisation, les terminaux du faisceau 111 situés dans la zone 211, mais également les terminaux situés au centre de faisceaux dont la couleur est identique à celle du faisceau 111 dans le schéma de réutilisation à P = 2 couleurs, comme par exemple les faisceaux 112 à 114 et 131 à 134, peuvent utiliser une même deuxième ressource fréquentielle f₅ tandis que les faisceaux 121 à 124 et 141 à 144 peuvent utiliser une même deuxième ressource fréquentielle f₆.

Si l'implémentation de la réutilisation fractionnaire de fréquences sur tous les faisceaux permet d'augmenter la capacité du système, elle entraîne une complexification notable de la charge utile, en particulier la section de puissance. Elle n'est alors adaptée que lorsque le besoin de bande passante sur le demi-lien entre le satellite et la passerelle augmente de manière importante, et n'est pas véritablement une réponse adaptée aux disparités géographiques de besoin de capacité sur les différents faisceaux.

D'autres méthodes connues de l'homme du métier permettent de gagner en flexibilité de répartition de la capacité.

Une première méthode consiste en l'utilisation d'un procédé de réutilisation des fréquences à N couleurs, et l'attribution de plus ou moins de puissance aux différents faisceaux en fonction de leur charge. L'augmentation de la puissance permettant d'améliorer les bilans de liaison, il est donc possible d'utiliser des schémas de modulation et de codage ayant une meilleure efficacité spectrale pour ces faisceaux. Cependant, le gain apporté par une telle méthode est limité, l'augmentation de puissance pour un faisceau entraînant également une augmentation du niveau des interférences avec les faisceaux utilisant la même ressource fréquentielle.

Une deuxième méthode consiste en l'utilisation d'un procédé de réutilisation de fréquences à N couleurs, et l'allocation dynamique des terminaux entre les différents faisceaux afin de répartir la charge depuis un faisceau chargé vers un faisceau moins chargé. En effet, les terminaux situés dans des zones d'intersections entre deux faisceaux, ou en périphérie d'un faisceau, peuvent être attribués indifféremment à l'un ou l'autre des faisceaux, ce qui permet d'équilibrer la charge des faisceaux, et d'apporter ainsi de la flexibilité. Cette méthode n'est cependant que peu efficace car elle ne concerne qu'un nombre limité de terminaux. Le bilan de liaison décroit très vite lorsque la méthode sélectionne des terminaux s'éloignant des bords du faisceau.

Ensuite, une troisième méthode consiste à utiliser un procédé de réutilisation de fréquences à N couleurs, et à optimiser la largeur de la bande de fréquence allouée aux faisceaux en fonction de la charge, de manière à attribuer plus de bande aux faisceaux ayant la plus forte demande de capacité. Bien qu'efficace en matière de flexibilité, la mise en oeuvre de cette méthode nécessite l'utilisation de composants RF (Radio Fréquence) pouvant être reconfigurés dynamiquement sur le satellite. Ces composants, comme par exemple les filtres RF ou les commutateurs, engendrent une augmentation significative de la masse et/ou de la puissance consommée par la charge utile embarquée sur le satellite. La flexibilité est donc obtenue en contrepartie d'une augmentation de la charge utile embarquée sur le satellite.

Enfin, une quatrième méthode permet d'apporter de la flexibilité au réseau satellite en allouant les ressources aux différents faisceaux selon un procédé dit de saut de faisceau (en anglais Beam Hopping). Ce procédé définit une trame de saut contenant différents intervalles temporels (en anglais time slots), et réalise une allocation temporelle et fréquentielle des ressources aux différents faisceaux. Pour ceci, des groupes de faisceaux sont constitués, qui utilisent une même ressource fréquentielle. Les faisceaux du groupe sont illuminés alternativement en fonction de l'allocation des intervalles temporels de la trame de saut. En allouant plus ou moins d'intervalles temporels aux faisceaux en fonction de leur charge, ce procédé optimise l'utilisation de la ressource spectrale

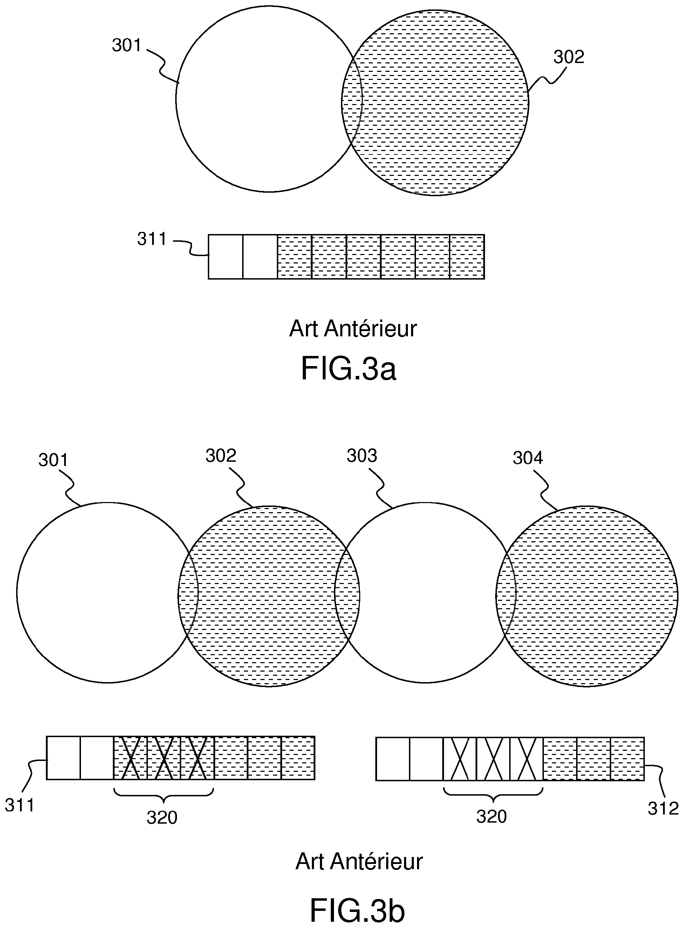

La figure 3a illustre un tel fonctionnement, dans le cas où les canaux sont regroupés par paires. Dans la figure 3a, la charge doit être répartie entre un premier faisceau 301 et un deuxième faisceau 302. Le principe peut être étendu de manière identique à un plus grand nombre de faisceaux et à des faisceaux non adjacents. Dans l'exemple, le faisceau 302 est en surcharge, tandis que le faisceau 301 en sous-charge. L'attribution des intervalles temporels de la trame de saut 311 entre les deux faisceaux privilégiera alors le faisceau 302. Dans l'exemple, deux intervalles sur huit sont attribués au faisceau 301, et six intervalles sur huit sont attribués au faisceau 302. Ces faisceaux utilisant la même ressource fréquentielle, le faisceau 302 disposera donc de 75% de la ressource, et 25% pour le faisceau 301. Ce procédé permet d'adapter la répartition des ressources en fonction des besoins, et donc d'apporter de la flexibilité au réseau.

Dans le cas particulier où 50% des intervalles temporels sont attribués à chacun des slots, et où les spots disposent de la totalité de la ressource fréquentielle, la capacité de chacun des faisceaux est égale à celle obtenue par un procédé de réutilisation des ressources pour lequel N vaut 2, (4 lorsque la diversité de polarisation est utilisée).

La bande de fréquence allouée séquentiellement peut être constituée d'une ou plusieurs porteuses. C'est alors l'ensemble des porteuses qui est commuté d'un faisceau à l'autre.

Une telle méthode apporte donc une réponse locale aux besoins de flexibilité de la charge entre deux faisceaux adjacents. A chaque instant, un seul faisceau peut disposer de l'ensemble des ressources fréquentielles, cette séparation temporelle permettant d'assurer l'absence d'interférences entre les différents faisceaux qui partagent la trame de saut. L'utilisation de composants comme par exemple des commutateurs à ferrite, permet de réaliser la fonction de commutation rapide à bord du satellite (typiquement toutes les millisecondes), pour un surcroît limité de masse charge utile dans le satellite.

Cependant, cette solution ne permet pas de répondre au problème de l'augmentation de la charge dans une zone géographique comprenant plusieurs faisceaux.

La figure 3b illustre ce problème. Aux faisceaux de la figure 3a sont ajoutés les faisceaux 303 et 304. Le faisceau 303 est en surcharge, et le faisceau 304 en sous charge. L'augmentation de la charge d'un réseau satellite étant le plus souvent localisée autour d'un groupe de faisceaux, ce cas est un cas pratique courant.

L'utilisation d'un procédé de saut de faisceaux permet alors d'attribuer différents intervalles temporels aux faisceaux 303 et 304 dans la trame de saut 312. Afin de répartir la charge entre les faisceaux en fonction de la demande, cinq intervalles de temps sont attribués au faisceau 303 et trois au faisceau 304.

Dans ce cas précis, les faisceaux 302 et 303, adjacents et en manque de ressources, utilisent tout deux l'ensemble des ressources fréquentielles dans les intervalles temporels 320. Cette utilisation génère des interférences venant réduire la capacité et la disponibilité du service en bord de chacun de ces faisceaux, et va au final considérablement dégrader la capacité globale du réseau.

L'utilisation du saut de faisceau permet donc de répartir la charge localement entre des faisceaux adjacents, mais ne résout pas le problème de flexibilité lorsque celui-ci est envisagé sur l'ensemble du réseau.

Le brevet US 6,377,561 B1 décrit une autre manière de satisfaire les pics locaux de demande de capacité, en regroupant les faisceaux par groupes de faisceaux adjacents, et en distribuant les ressources en fréquence et en temps à l'intérieur de chacun de ces groupes en fonction de la charge. Cette méthode apporte de la flexibilité au niveau d'un groupe de faisceaux, mais ne répond pas au problème de flexibilité lorsqu'une forte demande de capacité est localisée sur un groupe de faisceaux adjacents, et ne résout pas les problèmes d'interférences entre faisceaux adjacents de groupes de faisceaux adjacents.

La demande de brevet US 2014/0286236 A9 décrit quant à elle une méthode dans laquelle les allocations de fréquences aux faisceaux sont flexibles dans le temps et dans l'espace. Cependant, cette méthode n'adresse pas les problèmes d'interférences entre faisceaux adjacents, et est donc sous optimale en termes de capacité globale.

L'invention résout le problème de la flexibilité de répartition de la capacité à l'intérieur d'un système satellitaire multifaisceaux, en utilisant un schéma spécifique d'allocation fractionnaire des ressources fréquentielles associé à un mécanisme de saut de faisceaux. Elle permet ainsi de réorganiser la manière dont la capacité est distribuée sur l'ensemble de la zone de couverture du satellite, et d'améliorer la capacité globale du réseau.

L'invention s'applique aux réseaux de communications satellite multifaisceaux. Ces réseaux utilisent généralement la bande de fréquence Ka (27.5 GHz à 31 GHz), mais l'invention s'applique de manière identique quelle que soit la bande de fréquence.

A cet effet, l'invention décrit un procédé d'allocation dynamique de ressources dans un réseau satellitaire comprenant au moins un satellite configuré pour former une pluralité de faisceaux satellitaires et des terminaux. Le procédé se caractérise en ce qu'il comprend des étapes, exécutées par un superviseur de réseau de :
- rassemblement des faisceaux en groupes de faisceaux à partir d'une information de charge globale de chacun des faisceaux,
- allocation de ressources fréquentielles à chacun des groupes de faisceaux,
- détermination, au sein des faisceaux d'un même groupe et des faisceaux de groupes différents partageant des ressources fréquentielles communes, de zones géographiques dans lesquelles ces ressources fréquentielles peuvent être utilisées simultanément,
- et pour chacun des groupes de faisceaux à partir de la charge globale des faisceaux et des zones géographiques déterminées, détermination d'une trame de saut, ladite trame de saut comprenant des premiers intervalles temporels, dans lesquels les ressources fréquentielles sont allouées à l'ensemble des terminaux d'un des faisceaux du groupe de faisceaux, et des deuxièmes intervalles temporels, dans lesquels les ressources fréquentielles sont allouées à un sous-ensemble de terminaux d'au moins un faisceau du groupe de faisceaux.

Le procédé selon l'invention comprend également des étapes exécutées par au moins un contrôleur associé à au moins un des faisceaux satellitaires de :
- identification, réalisée pour chacun des faisceaux, dudit sous-ensemble de terminaux et allocation aux terminaux des ressources fréquentielles associées à des instants d'émission dans les intervalles temporels de la trame de saut,
- remontée au superviseur d'informations concernant la charge globale de chacun des faisceaux auquel il est associé.

Selon un mode de réalisation préférentiel du procédé selon l'invention, durant les deuxièmes intervalles temporels, les ressources fréquentielles sont allouées à un sous-ensemble de terminaux d'un seul des faisceaux du groupe de faisceaux.

Avantageusement, les trames de sauts de groupes de faisceaux partageant des ressources fréquentielles communes sont synchrones. Encore plus avantageusement, les trames de saut de l'ensemble des groupes de faisceaux sont synchrones.

Avantageusement, la durée des trames de saut, le nombre d'intervalles temporels des trames de saut, et la position des intervalles temporels durant lesquels les ressources fréquentielles sont allouées à un sous-ensemble de terminaux d'au moins un faisceau du groupe de faisceaux, sont identiques pour des groupes de faisceaux partageant des ressources fréquentielles communes.

Selon un mode de réalisation du procédé selon l'invention, l'étape d'identification du sous-ensemble de terminaux est réalisée à partir de la position géographique des terminaux.

Selon un autre mode de réalisation du procédé selon l'invention, l'étape d'identification du sous-ensemble de terminaux est réalisée en mesurant pour chaque terminal un rapport signal à bruit plus interféreur (C/(N+I)).

Selon un mode de réalisation du procédé selon l'invention, les étapes exécutées par un superviseur de réseau sont réalisées périodiquement.

Selon un autre mode de réalisation du procédé selon l'invention, les étapes exécutées par un superviseur de réseau sont réalisées lorsqu'au moins un des faisceaux requiert un ajustement de sa capacité.

L'invention adresse en outre un superviseur de réseau dans un réseau satellitaire comprenant au moins un satellite configuré pour former une pluralité de faisceaux satellitaires, et des terminaux. Le superviseur est caractérisé en ce qu'il est configuré pour réaliser les quatre premières étapes d'un mode de réalisation du procédé d'allocation dynamique de ressources selon l'invention.

L'invention adresse également un contrôleur de réseau dans un réseau satellitaire comprenant au moins un satellite configuré pour former une pluralité de faisceaux satellitaires, et des terminaux. Le contrôleur de réseau est caractérisé en ce qu'il est associé à au moins un des faisceaux satellitaires, et en ce qu'il est configuré pour réaliser les deux dernières étapes d'un mode de réalisation du procédé d'allocation dynamique de ressources selon l'invention pour le ou les faisceaux auxquels il est associé.

Enfin, l'invention porte sur un réseau satellitaire comprenant :
- un superviseur de réseau tel que décrit précédemment,
- au moins un contrôleur de réseau tel que décrit précédemment, et
- au moins un terminal utilisateur.

L'invention sera mieux comprise et d'autres caractéristiques et avantages apparaîtront mieux à la lecture de la description qui suit, donnée à titre non limitatif, et grâce aux figures annexées parmi lesquelles :
- la figure 1, déjà décrite, présente le résultat d'un procédé d'allocation des ressources satellitaire selon une méthode connue de réutilisation des fréquences,
- la figure 2, déjà décrite, présente le résultat d'un procédé d'allocation des ressources satellitaires selon une méthode connue de réutilisation fractionnelle des fréquences,
- la figure 3a, déjà décrite, présente le résultat d'un procédé d'allocations des ressources satellitaires selon une méthode de saut de faisceau,
- la figure 3b, déjà décrite, présente le problème de l'augmentation de la charge dans des faisceaux adjacents lors que les ressources satellitaires sont allouées selon une méthode de saut de faisceau,
- la figure 4a représente un premier mode de réalisation d'un procédé d'allocation des ressources satellitaires dans un réseau satellitaire multifaisceaux selon l'invention,
- La figure 4b présente un deuxième mode de réalisation du procédé d'allocation des ressources satellitaires dans un réseau satellitaire multifaisceaux selon l'invention,
- La figure 4c présente un troisième mode de réalisation du procédé d'allocation des ressources satellitaires dans un réseau satellitaire multifaisceaux selon l'invention,
- la figure 5a représente un quatrième mode de réalisation d'un procédé d'allocation des ressources satellitaires dans un réseau satellitaire multifaisceaux selon l'invention,
- la figure 5b représente un cinquième mode de réalisation d'un procédé d'allocation des ressources satellitaires dans un réseau satellitaire multifaisceaux selon l'invention,
- la figure 6 présente les étapes du procédé selon l'invention,
- la figure 7 représente les étapes d'un procédé de fonctionnement d'un terminal utilisateur dans un réseau satellitaire selon l'invention.

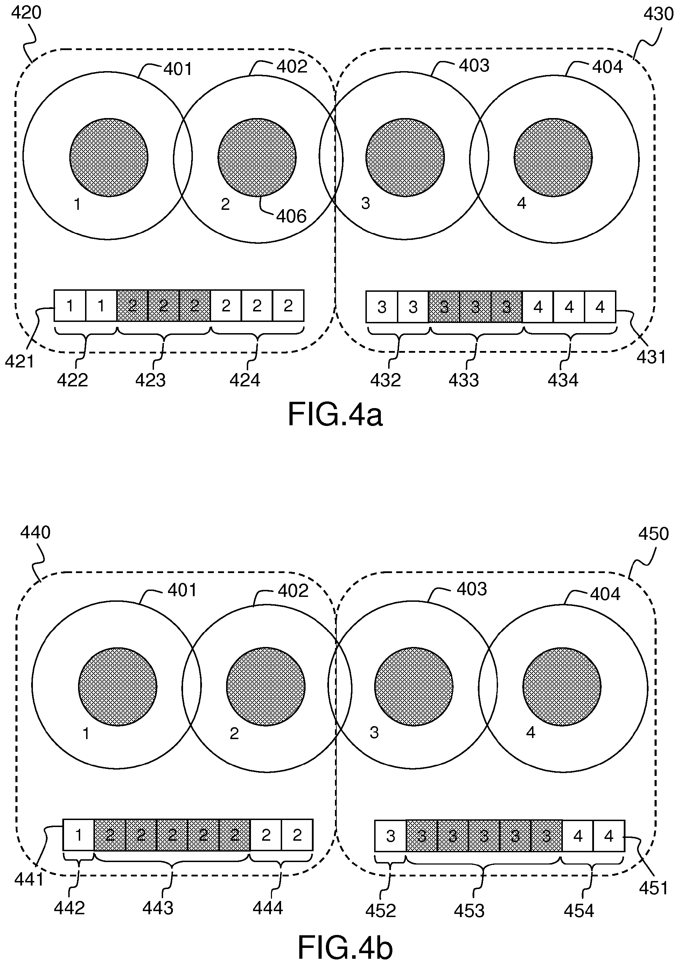

La figure 4a présente un premier mode de réalisation du procédé d'allocation des ressources satellitaires dans un réseau satellitaire multifaisceaux selon l'invention.

L'exemple se limite à la représentation de quatre faisceaux, mais s'applique de manière identique lorsque le nombre de faisceaux varie.

Les faisceaux sont représentés dans l'ensemble des figures par des ronds, qui sont des représentations schématiques d'une zone géographique. La position des différents faisceaux, et leur arrangement relatif, pourrait être différent de ce qui est représenté sur les figures à titre d'exemple non limitatif, la transposition de l'invention à des arrangements de réseaux différents ne posant pas de problème particulier à l'homme du métier. Ces faisceaux sont formés par un ou plusieurs satellites disposant d'une ou plusieurs antennes directives, ou d'antennes au diagramme de rayonnement commandable, comme par exemple des antennes actives. Un satellite multifaisceaux est adapté à formé une pluralité de tels faisceaux, et par conséquent à desservir simultanément une pluralité de zones géographiques différentes.

Dans la figure 4a, les faisceaux 402 et 403 sont en surcharge (le trafic demandé par les terminaux utilisateurs de ces faisceaux est supérieur aux capacités des faisceaux), tandis que les réseaux 401 et 404 sont en sous-charge. De manière à leur apporter de la flexibilité, des groupes de faisceaux sont créés, en prenant en considération la charge globale du réseau. Avantageusement, ces groupes sont constitués à partir d'un mélange de réseaux en sous charge et de réseaux en surcharge. Dans la figure 4a, le groupe 420 contient les faisceaux 401 et 402, tandis que le groupe 430 contient les faisceaux 403 et 404. Dans l'exemple, une même ressource fréquentielle est attribuée à chacun des groupes de faisceaux. Les faisceaux constituant un groupe ne sont pas nécessairement adjacents. Au contraire, les groupes sont formés de manière à répartir équitablement la charge de l'ensemble du réseau tout en prenant en compte les contraintes d'interférences entre faisceaux, ce qui peut aboutir à des groupes constitués de faisceaux distribués sur l'ensemble du réseau satellitaire.

Une trame de saut 421 est associée au groupe 420. De manière à répartir la charge des faisceaux en fonction des besoins, la trame contient des intervalles temporels 422, durant lesquels les ressources fréquentielles du groupe sont attribuées exclusivement aux terminaux du faisceau 401. La trame contient également des intervalles temporels 424 durant lesquels les ressources fréquentielles sont attribuées exclusivement à l'ensemble des terminaux du faisceau 402, et des intervalles temporels 423 durant lesquels les ressources fréquentielles du groupe ne peuvent être utilisées que par un sous-ensemble de terminaux dans un ou plusieurs faisceaux du groupe.

De la même manière, une trame de saut 431 est associée au groupe 430. Elle comprend des intervalles temporels 432 dans lesquels les ressources fréquentielles sont exclusivement attribuées à l'ensemble des terminaux du faisceau 403, des intervalles temporels 434 dans lesquels les ressources fréquentielles sont exclusivement attribuées à l'ensemble des terminaux du faisceau 404, et des intervalles temporels 433 dans lesquels les ressources fréquentielles sont attribuées à un sous-ensemble de terminaux dans un ou plusieurs faisceaux du groupe.

Les groupes 420 et 430 partagent les mêmes ressources fréquentielles (soit dans l'exemple l'ensemble des ressources fréquentielles attribuées au réseau). Leurs trames de saut doivent alors être synchronisées, et présenter une structure identique, c'est-à-dire une durée, un nombre d'intervalles temporels, et une position des intervalles temporels durant lesquels les ressources sont attribuées à un sous-ensemble de terminaux identiques. De cette manière, l'utilisation des ressources fréquentielles sur l'ensemble des faisceaux de ces groupes est synchronisée, et ne génère pas d'interférences non désirables entre les émissions dans des faisceaux distincts. L'utilisation de trames de sauts synchronisées ayant une structure identique est nécessaire dès lors que deux groupes ont en commun au moins une partie des ressources fréquentielles qui leur sont attribuées.

Dans la figure 4a, on observe que, de par l'attribution des intervalles temporels dans la trame de saut, les faisceaux adjacents 402 et 403 n'ont en commun que les intervalles temporels 423 et 433. Durant ces intervalles, les ressources fréquentielles sont attribuées à un sous-ensemble de terminaux pour lesquels l'utilisation des mêmes ressources dans des faisceaux voisins ne vient pas perturber le fonctionnement. Ce sous-ensemble de terminaux peut être déterminé selon leurs positions géographiques. En effet, la directivité des antennes fait que plus les terminaux sont proches du centre du faisceau, moins ils sont impactés par les émissions réalisées dans les autres faisceaux. Le sous-ensemble peut également être déterminé en mesurant un niveau de rapport signal à bruit plus interféreur (C/(N+I)) pour chacun des terminaux, les terminaux présentant un rapport signal à bruit sur interféreur supérieur à un seuil faisant alors partie du sous-ensemble.

Ainsi, pour le faisceau 402, le sous-ensemble 406 de terminaux pouvant utiliser les intervalles temporels 423 communs à tous les faisceaux du groupe seront principalement les terminaux situés à proximité du centre, tandis que les terminaux en bordure de faisceau n'utiliseront que l'intervalle 424.

Avantageusement, et afin de diminuer encore le niveau des interférences au sein d'un groupe, les intervalles temporels dans lesquels les ressources fréquentielles sont attribuées au sous-ensemble de terminaux du groupe (soit dans l'exemple les intervalles 423 ou 433) sont dédiées exclusivement au sous-ensemble de terminaux d'un seul des faisceaux. Ce mode de fonctionnement est le mode de fonctionnement préférentiel de par sa simplicité d'implémentation. En effet, l'ensemble des faisceaux du groupe est alors desservi par un même répéteur au sein du satellite, des commutateurs permettant de modifier l'accès vers la source de l'antenne en fonction de l'intervalle temporel en cours.

Le procédé d'allocation des ressources selon l'invention rassemble tout d'abord les faisceaux en groupes de faisceaux. Cette étape est primordiale au bon déroulement du procédé. Les faisceaux sont regroupés de manière à maximiser leur chance d'être complémentaires en termes de capacité. Ainsi, les faisceaux présentant le plus de trafic sont préférablement groupés avec ceux présentant le moins de trafic. Le regroupement se fait donc sur des critères d'analyse globale de la demande à l'échelle de l'ensemble du réseau satellitaire. Ce regroupement est complémentaire de l'étape d'attribution des intervalles temporels des trames de saut. La position géographique et le voisinage des différents faisceaux doivent être pris en considération, afin de tenir compte des interférences entre faisceaux. Pour ceci, le regroupement se fera de manière à garantir une certaine distance, configurable, entre des faisceaux de groupes différents utilisant les mêmes ressources fréquentielles dans des intervalles de temps communs (par exemple entre le faisceau 401 et 403 lors des intervalles temporels 422 et 432). Le regroupement des faisceaux n'est donc pas nécessairement réalisé à partir de faisceaux voisins, mais résulte d'une optimisation complexe de l'ensemble du réseau. Ce regroupement est évolutif dans le temps, en fonction des variations de charge du réseau. De cette flexibilité d'appairage des différents faisceaux du réseau satellite va dépendre la capacité du réseau à répondre à des besoins géographiquement localisés. Le procédé de regroupement des faisceaux dans des groupes, d'attribution des fréquences aux groupes, et d'attribution des intervalles temporels aux différents faisceaux des groupes peut donc nécessiter plusieurs itérations pour parvenir à la solution optimale.

Ainsi, dans l'exemple, si les spots présentant une forte demande avaient été les spots 401 et 402, le regroupement logique des faisceaux aurait été de grouper le faisceau 401 avec le faisceau 404, et le faisceau 402 avec le faisceau 403.

La trame de saut 420 attribue les ressources fréquentielles durant les deux premiers intervalles temporels 422 au faisceau 401, durant les trois intervalles temporels 423 et durant les trois intervalles temporels 424 au faisceau 402. Ainsi, le faisceau 401 dispose de 25% des ressources fréquentielles, tandis que le faisceau 402 dispose de 75% des ressources, répondant ainsi au besoin supplémentaire de charge sur le faisceau 402.

De même, dans le groupe 430 contenant les faisceaux 403 et 404 associés à la trame de saut 431, le faisceau 403 dispose des ressources fréquentielles durant les intervalles temporels 432 et 433, tandis que le faisceau 404 en dispose durant l'intervalle temporel 424. Ainsi, le faisceau 403 dispose de 62.5% des ressources fréquentielles, tandis que le faisceau 404 dispose de 37.5% des ressources, répondant ainsi au besoin supplémentaire de charge sur le faisceau 403.

Lors des intervalles temporels 423/433, les ressources peuvent être allouées indifféremment au sous-ensemble de terminaux de l'un ou l'autre des faisceaux d'un même groupe, ou à tous les sous-ensembles de terminaux du groupe. Les sous-ensembles de terminaux utilisant ces intervalles temporels étant sélectionnés par rapport à leur position géographique ou leur C/(N+I), le niveau d'interférence avec les émissions réalisées dans les faisceaux satellitaires voisins est considérablement réduit, en comparaison avec l'état de l'art tel que présenté dans la figure 3b. L'invention répond donc bien au besoin de flexibilité requis en cas d'augmentation de la charge sur des faisceaux adjacents.

La charge de chacun des faisceaux est susceptible de varier au cours du temps. C'est pourquoi le procédé selon l'invention est réalisé de manière périodique, la durée de la période étant configurable. Dans un autre mode de réalisation, le procédé d'allocation de ressources selon l'invention est réalisé dès que la demande sur l'un des faisceaux varie de manière significative, et que cette évolution de la demande requiert un ajustement de la capacité du faisceau.

La figure 4b présente un deuxième mode de réalisation du procédé d'allocation des ressources satellitaires dans un réseau satellitaire multifaisceaux selon l'invention, dans lequel la charge requise par les faisceaux a évolué par rapport au cas représenté dans la figure 4a. Dans l'exemple, les faisceaux 402 et 403 nécessitent d'avantage de ressources tandis que les faisceaux 401 et 404 n'utilisent pas l'ensemble des ressources qui leur sont attribuées.

Le procédé est exécuté à nouveau. Dans l'exemple, le regroupement des faisceaux en groupes n'a pas évolué, mais une nouvelle structure de trame de saut, permettant de mieux répondre au besoin exprimé, est définie. La trame 441 est associée au groupe 420, et la trame 451 est associée au groupe 430. Dans ces trames, le nombre d'intervalles temporels dans lesquels les ressources fréquentielles sont utilisables par le sous-ensemble de terminaux est augmenté, au détriment du nombre d'intervalles temporels dans lesquels les ressources sont spécifiquement attribuées à l'ensemble des terminaux des faisceaux.

Ainsi, la trame de saut 441 attribue les ressources fréquentielles durant le premier intervalle temporel 442 à l'ensemble des terminaux du faisceau 401, durant les deux intervalles temporels 444 à l'ensemble des terminaux du faisceau 402, et durant les cinq intervalles temporels 443 au sous-ensemble de terminaux du faisceau 402. De même, les ressources fréquentielles sont attribuées durant le premier intervalle temporel 452 à l'ensemble des terminaux du faisceau 403, durant les deux intervalles temporels 454 à l'ensemble des terminaux du faisceau 404, et durant les cinq intervalles temporels 453 au sous-ensemble de terminaux du faisceau 403.

Le faisceau 401 dispose alors de 12.5% des ressources, tandis que le faisceau 402 dispose cette fois ci de 87.5% des ressources, augmentant ainsi sa capacité à servir l'ensemble des terminaux du faisceau par rapport au cas présenté en figure 4a. Il en est de même pour la capacité attribuée au faisceau 403, qui passe à 75%.

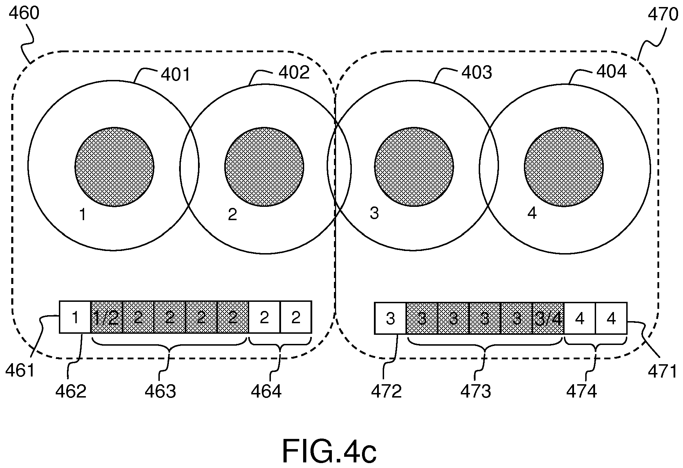

La figure 4c présente un troisième mode de réalisation du procédé d'allocation des ressources satellitaires dans un réseau satellitaire multifaisceaux selon l'invention, dans lequel la charge requise par les faisceaux a évolué de manière identique au cas présenté en figure 4b. Il se différencie de la figure 4b par le fait qu'un même intervalle temporel peut être utilisé simultanément par des sous-ensembles de terminaux appartenant à des faisceaux différents au sein d'un même groupe.

Cependant, afin de pouvoir comparer les résultats obtenus tout en conservant un bilan de consommation équivalent, les ressources doivent être divisées par le nombre de faisceaux qui les partagent dans le même intervalle.

Ainsi, le faisceau 401 dispose de 18.75% des ressources (1/8 des ressources pour l'intervalle temporel 461, et 1/16 pour le premier intervalle temporel du groupe 463, tandis que le faisceau 402 dispose cette fois ci de 81.25% des ressources, augmentant ainsi sa capacité à servir l'ensemble des terminaux du faisceau par rapport au cas présenté en figure 4a. Il en est de même pour la capacité attribuée au faisceau 403, qui passe à 68.75% et pour celle du faisceau 404, qui passe à 31.25%.

L'invention répond donc bien au besoin de flexibilité sur l'ensemble du réseau satellitaire.

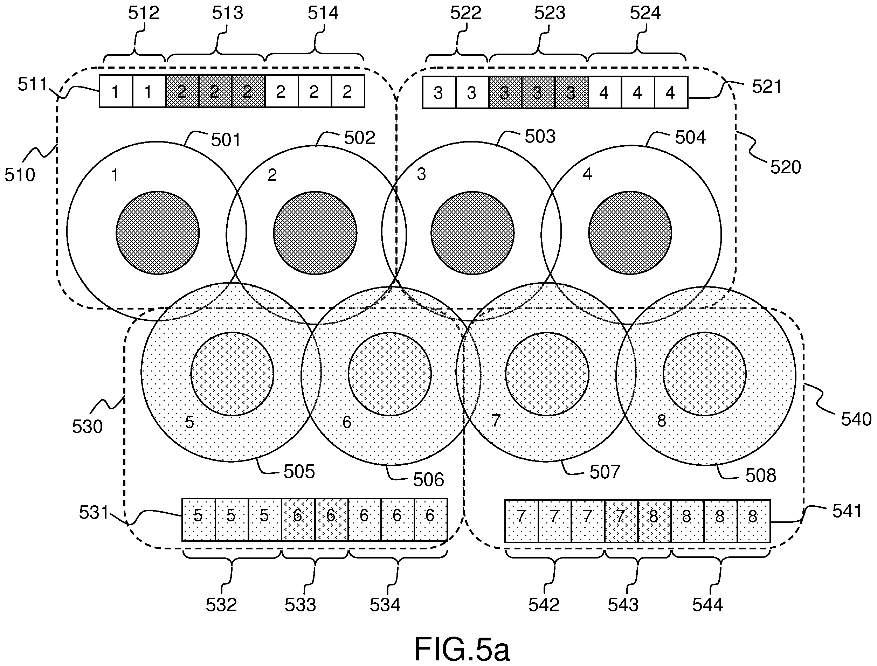

La figure 5a présente un quatrième mode de réalisation d'un procédé d'allocation des ressources satellitaires dans un réseau satellitaire multifaisceaux, dans lequel les faisceaux 502, 503 et 506 requièrent une quantité de ressources supérieure à la moyenne, tandis que les faisceaux 501, 504 et 505 n'exploitent pas la totalité des ressources qui leur sont attribuées. Dans la figure 5a, des ressources fréquentielles sont utilisées entre les différents groupes de faisceaux, ce qui a un effet avantageux sur le taux d'interférences entre les faisceaux, et donc sur le bilan de liaison de chaque faisceau.

Les groupes de faisceaux 510 (faisceaux 501 et 502), 520 (faisceaux 503 et 504), 530 (faisceaux 505 et 506) et 540 (faisceaux 507 et 508) sont alors constitués. Des premières ressources fréquentielles sont attribuées aux groupes 510 et 520, des deuxièmes ressources fréquentielles sont attribuées aux groupes 530 et 540.

Ces premières et deuxièmes ressources peuvent correspondre chacune à la moitié de la bande de fréquence totale allouée au réseau satellitaire. Dans un mode de réalisation préférentiel, la première ressource fréquentielle comprend l'ensemble de la bande de fréquence allouée au réseau satellitaire, la deuxième ressource fréquentielle comprenant la même bande de fréquence, mais dans la polarisation orthogonale aux premières ressources fréquentielles.

Les groupes 510 et 520 utilisant des ressources fréquentielles communes, les trames de saut 511 et 512 qui leur sont associées ont une structure identique, c'est à dire une durée identique, un nombre d'intervalles temporels identique, et un positionnement des intervalles temporels dans lesquels les ressources fréquentielles sont utilisées par les sous-ensembles de terminaux identiques.

Dans les intervalles temporels 512 de la trame de saut 511, les ressources fréquentielles associées au groupe 510 sont attribuées exclusivement à l'ensemble des terminaux du faisceau 501. De même, dans les intervalles temporels 514, les ressources du groupe sont attribuées exclusivement à l'ensemble des terminaux du faisceau 502. Durant les intervalles temporels 513, les ressources sont attribuées aux sous-ensembles de terminaux pouvant les utiliser sans interférer avec les faisceaux utilisant les mêmes ressources dans les mêmes intervalles temporels. Dans l'exemple, elles sont allouées exclusivement au sous-ensemble de terminaux d'un seul faisceau, le 502. Ainsi, le faisceau 501 dispose de 25% de la capacité du réseau, tandis que le faisceau 502 en dispose de 75%.

De manière identique, le faisceau 503 dispose des intervalles temporels 522 et 523, et donc de 62.5% des ressources fréquentielles, tandis que le faisceau 504 dispose des intervalles 524, et donc de 37.5% des ressources fréquentielles.

Les groupes 530 et 540 utilisent les secondes ressources fréquentielles.

Ainsi, les trames de saut 531 et 541, respectivement associées à ces groupes, peuvent avoir une structure différente des trames de saut 511 et 521 sans générer d'interférences.

L'attribution des intervalles temporels aux faisceaux permet de porter la capacité du faisceau 505 à 37.5%, celle du faisceau 506 à 62.5%, et celles des faisceaux 506 et 507 à 50%.

Ce mode de réalisation répond donc bien au besoin de flexibilité, en permettant aux faisceaux 502, 503 et 506 d'augmenter leur capacité au détriment de faisceaux n'utilisant pas leur pleine capacité, et donc en répartissant la charge sur l'ensemble du réseau.

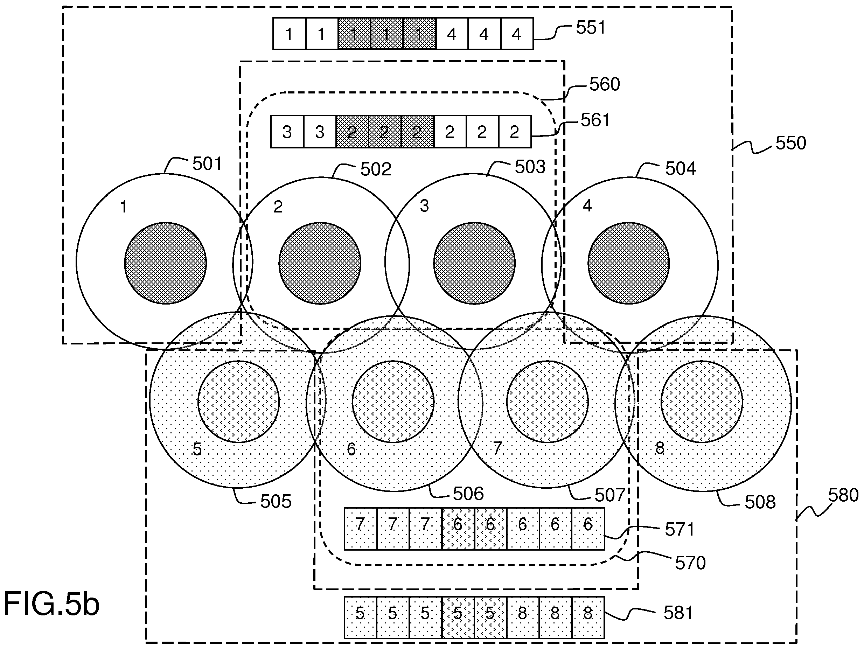

La figure 5b présente un cinquième mode de réalisation d'un procédé d'allocation des ressources satellitaires dans un réseau satellitaire multifaisceaux, dans lequel les faisceaux requérant un surplus de capacité sont les faisceaux 501, 502 et 505.

Dans ce mode de réalisation, et de manière à répondre à la problématique de charge en la considérant de manière globale sur l'ensemble du réseau satellitaire, les groupes de faisceaux sont constitués comme suit :
- groupe 550 : faisceaux 501 et 504
- groupe 560 : faisceaux 502 et 503
- groupe 570 : faisceaux 506 et 507
- groupe 580 : faisceaux 505 et 508.

La répartition des intervalles temporels donnés dans la figure 5b permet de répondre au besoin d'augmentation de capacité des faisceaux 501, 502 et 505.

Grâce à l'invention, le problème de l'augmentation de capacité (par rapport à la capacité moyenne) pour des spots adjacents, c'est-à-dire faisant partie d'un groupe de faisceaux dont la charge est supérieure à la capacité du faisceau, est résolu. Cela permet au système de bénéficier pleinement du potentiel de flexibilité de répartition de capacité permise par les équipements bord qui implémentent le saut de faisceau.

Le procédé selon l'invention s'applique en constituant des groupes à partir de deux faisceaux, mais pourrait s'appliquer de manière identique pour un nombre supérieur de faisceaux par groupe, voire pour des groupes de faisceaux dont la taille varie au cours du temps.

Ce procédé est également compatible du procédé, connu par l'homme du métier et exposé précédemment, d'adaptation de la puissance utilisé par les différents faisceaux.

Les contraintes d'implémentation et d'opération associées à l'invention sont les suivantes :
- toutes les passerelles du réseau satellitaire doivent être synchronisées avec le dispositif de commutation de faisceaux à bord du satellite, pour permettre la commutation des faisceaux à la cadence des intervalles temporels, cependant cette synchronisation est classique dans le cadre de l'utilisation d'un système à saut de faisceaux,
- les trames de saut du système utilisant des ressources fréquentielles communes doivent être synchronisées, même dans une architecture multi-passerelles,
- les terminaux doivent être en mesure de recevoir un flux multiplexé temporellement par paliers, ce qui est classique dans le cadre de l'utilisation d'un système à saut de faisceaux,
- un management de la charge des faisceaux doit permettre d'optimiser l'allocation des intervalles temporels dans les trames de saut aux différents faisceaux en fonction de leur charge. Ce management est du ressort du superviseur du réseau d'accès.

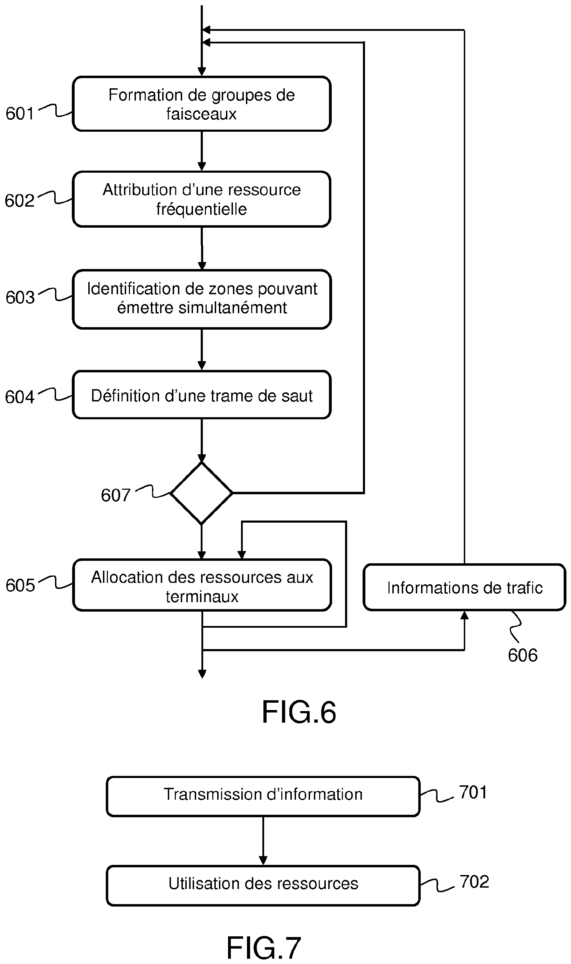

La figure 6 présente les étapes du procédé selon l'invention. Celle-ci se situe dans le contexte d'un réseau satellitaire multifaisceaux, et fait suite à une phase de planification initiale permettant de définir les différents faisceaux de la zone de couverture.

Le procédé comprend les étapes suivantes :
- une première étape 601 de formation des groupes de faisceaux, réalisée en considérant la charge globale de l'ensemble des faisceaux du réseau satellitaire,
- une deuxième étape 602 d'attribution d'une ressource fréquentielle aux groupes de faisceaux. Suivant les choix de configuration réalisés, cette ressource fréquentielle peut être identique pour chacun des groupes, ou différentiée.
- une troisième étape 603 de détermination, au sein de tous les faisceaux partageant des ressources fréquentielles communes, qu'ils soient d'un même groupe ou de groupe différents, de zones géographiques dans lesquelles les ressources fréquentielles peuvent être utilisées simultanément dans tous les faisceaux sans que le niveau d'interférences générées ne vienne perturber les liens de communications. Cette étape n'identifie pas précisément les terminaux concernés, mais uniquement des positions potentielles. Pour ceci, des bilans de liaisons sont réalisés avec chacun des schémas de réutilisation des fréquences. Ces bilans de liaisons permettent de déterminer les interférences théoriques entre les utilisateurs des faisceaux utilisant simultanément les mêmes ressources fréquentielles, et donc les zones pouvant utiliser simultanément les mêmes ressources fréquentielles. De cette manière, une approximation du pourcentage de terminaux concerné peut être estimée. Grâce à cette connaissance, il est possible d'estimer la capacité pouvant être réalisée dans chaque faisceau, et ainsi de vérifier que l'allocation de slots réalisée lors de la prochaine étape satisfait la demande. Cette étape est donc nécessaire au dimensionnement des trames de saut, et en particulier au choix du nombre d'intervalles temporels associés à l'utilisation des deuxièmes ressources fréquentielles dans les étapes suivantes.
- Une quatrième étape 604 de définition d'une trame de saut pour chacun des groupes de faisceaux. Cette trame de saut a une structure (durée, nombre d'intervalles temporels, position des intervalles temporels attribués aux sous-ensembles de terminaux) qui est commune à l'ensemble des groupes partageant une même ressource fréquentielle. Les ressources fréquentielles associées au groupe sont réparties en fonction des intervalles temporels. Il existe donc deux types d'intervalles temporels : un premier type (422, 424), durant lequel les ressources sont attribuées exclusivement à l'ensemble des terminaux de l'un des faisceaux, et un deuxième type (423), durant lequel les ressources fréquentielles sont attribuées à un sous-ensemble de terminaux d'un ou de plusieurs faisceaux du groupe. Les intervalles d'un même type ou associés à un même faisceau ne sont pas nécessairement consécutifs. L'algorithme d'allocation des intervalles temporels aux faisceaux veille à minimiser les interférences entre faisceaux, et à desservir au mieux la charge demandée par chacun des faisceaux. Il doit donc être conscient des allocations réalisées pour l'ensemble des différentes trames de saut, et notamment de celles des groupes utilisant des ressources fréquentielles communes, ainsi que de celles des groupes ayant des faisceaux adjacents,
- une cinquième étape 605, d'identification au sein de chaque faisceau, d'un sous-ensemble de terminaux pouvant utiliser une ressource fréquentielle de manière à ce que les interférences avec les émissions réalisées dans les faisceaux satellitaires utilisant les mêmes ressources fréquentielles simultanément soient limitées, puis d'allocation des ressources à ces terminaux. Les ressources en question sont les ressources fréquentielles et les intervalles temporels qui sont réparties au sein d'un faisceau par le contrôleur entre les différents terminaux. Des instants d'émission sont donc attribués à chacun des terminaux, à l'intérieur des intervalles temporels de la trame associée au faisceau, durant lesquels les terminaux peuvent utiliser les ressources fréquentielles, et
- une sixième étape 606 de remontée d'informations sur la charge globale de chacun des faisceaux.

Le procédé dans son ensemble peut nécessiter plusieurs itérations avant de parvenir à une solution optimale. En particulier, les groupes créés lors de l'étape 601 ne permettent pas nécessairement d'aboutir à la définition d'une trame de saut, durant l'étape 604, qui satisfasse la demande de trafic dans l'ensemble des faisceaux, et qui garantisse l'absence d'interférences entre les différents faisceaux. Le but recherché étant de satisfaire les besoins de débit du maximum d'utilisateurs, tout en garantissant l'accès à un débit minimum garanti, plusieurs itérations des quatre premières étapes du procédé, associées à un test 607 d'adéquation aux exigences de performances recherchées, peuvent être nécessaires.

Enfin, lorsque les groupes, la répartition des ressources fréquentielles entre les groupes, la détermination des zones géographiques et la définition des trames de saut associées à chacun des groupes ont été réalisés de manière satisfaisante, les ressources sont allouées aux différents terminaux.

Selon un mode de réalisation, lors de la cinquième étape 605 du procédé selon l'invention, chaque terminal transmet au contrôleur sa position. A partir de cette information, le contrôleur décide, grâce à un design de référence, si le terminal est éligible au sous-ensemble de terminaux pouvant utiliser les deuxièmes intervalles temporels. L'état instantané du système ne rentre pas en compte dans la décision.

Selon un autre mode de réalisation, l'appartenance d'un terminal au sous-ensemble peut également être obtenue grâce à un message, transmis par le terminal au contrôleur lors de son entrée dans le réseau et/ou périodiquement, indiquant un niveau de rapport signal sur bruit plus interféreur (C/(N+I)). Ce fonctionnement permet d'élargir l'assiette des positions éligibles et donc l'amplitude de la flexibilité de répartition de capacité en faisant varier les critères d'appartenance au sous-ensemble de terminaux en fonction de la charge des différents faisceaux du réseau.

Enfin, l'identification des terminaux peut être réalisée en prenant en compte à la fois sa position géographique et un niveau de rapport signal sur bruit plus interféreur.

Ainsi, au sein d'un faisceau, certains terminaux ne communiquent que durant les intervalles temporels dans lesquels les ressources fréquentielles sont spécifiquement attribuées au faisceau auquel ils appartiennent, c'est le cas en particulier des terminaux se situant à proximité de la périphérie du faisceau. D'autres terminaux peuvent utiliser à la fois les ressources fréquentielles lors des intervalles temporels attribués exclusivement à l'ensemble des terminaux d'un faisceau ou les intervalles temporels attribués à un sous-ensemble de terminaux d'au moins un faisceau du groupe de faisceaux. Ce sont généralement les terminaux se situant à proximité du centre du faisceau.

Des informations concernant l'état global du trafic au sein de chaque faisceau sont remontées régulièrement, soit périodiquement, soit lorsque la charge sur un ou plusieurs faisceaux évolue de manière significative, soit lorsque l'un des faisceaux n'est plus en capacité de desservir les terminaux de sa zone de couverture. Ces informations permettent de déterminer s'il est nécessaire ou non d'exécuter à nouveau l'ensemble des étapes du procédé, afin de déterminer une topologie de réseau qui réponde à l'évolution de la demande.

Le procédé selon l'invention consiste en diverses étapes logicielles exécutées par une machine de calcul reprogrammable, comme par exemple un processeur, un microcontrôleur, ou un processeur de signal numérique (DSP), ou par une machine de calcul dédiée, comme par exemple un ensemble de portes logiques comme un FPGA (acronyme anglais pour Field-Programmable Gâte Array, ou réseau de portes programmables) ou un ASIC (acronyme anglais pour Application Specific Integrated Circuit, ou circuit intégré à application spécifique), ou tout autre module matériel. Les étapes peuvent être portées sur l'un ou l'autre des équipements du réseau satellitaire.

Il est destiné à être mis en oeuvre dans un réseau satellitaire comprenant :
- un superviseur de réseau, en charge de la gestion des ressources globales sur l'ensemble du réseau. Le superviseur réalise les quatre premières étapes du procédé (601 à 604), à savoir le regroupement des faisceaux, l'attribution des ressources fréquentielles aux différents groupes, l'identification de zones pouvant utiliser simultanément des mêmes ressources fréquentielles, et la définition des trames de saut. Ces étapes peuvent être itérées plusieurs fois par le superviseur, afin d'aboutir à la solution la plus satisfaisante possible. Enfin, ces étapes peuvent être réalisées de nouveau, soit de manière périodique, soit lorsque la charge du réseau satellitaire évolue, de manière à suivre dynamiquement les évolutions de la charge de l'ensemble du réseau. Le superviseur est en charge de la formation des groupes, et de la définition des trames, il n'a pas pour rôle la gestion des terminaux appartenant au sous-ensemble de terminaux pouvant utiliser les ressources fréquentielles simultanément, et ne se base que sur une distribution arbitraire de positions potentielles des terminaux et d'un modèle de trafic temporel pour la détermination du format des trames. La gestion des terminaux est à la charge d'un ou plusieurs contrôleurs, qui déterminent les allocations de ressources entre les différents terminaux au sein des intervalles temporels qui leur sont dédiés ;
- un ou plusieurs contrôleurs de réseau, en charge de la réalisation des cinquièmes et sixièmes étapes du procédé 605 et 606 pour les faisceaux auxquels ils sont associés. Les contrôleurs peuvent être colocalisés avec le superviseur, ou distribués au niveau des différentes passerelles du réseau. Ils sont en charge de la gestion d'un ou plusieurs faisceaux. Ils ont connaissance d'une part des affectations de ressources fréquentielles et temporelles réalisées par le superviseur de réseau pour chacun des faisceaux dont ils ont la charge, et d'autre part de la charge requise par chacun des terminaux des faisceaux, ainsi que des requêtes de capacité émises par ceux-ci, et des informations relatives à leurs conditions de réception (position géographique, rapport signal à bruit ou signal à bruit sur interféreur, taux d'erreur, ...). A partir de ces informations, les contrôleurs peuvent réaliser l'étape 605 d'identification des sous-ensembles de terminaux éligibles à l'utilisation des ressources fréquentielles dans les intervalles temporels dédiés à ces sous-ensembles de terminaux, répartissent ces ressources entre les terminaux, et déterminent le schéma de codage et de modulation employé par chacun des terminaux utilisateurs. L'étape d'identification des terminaux éligibles au sous-ensemble de terminaux est réalisée continuellement et dynamiquement. Elle est généralement réalisée trame par trame, et vise à adapter au mieux la répartition des ressources fréquentielles et temporelles du faisceau en fonction des profils de trafic des différents terminaux utilisateurs, soit leurs changements de position des terminaux, les variations des conditions de réception du signal, et l'entrée/sortie de terminaux dans le réseau. Enfin, les contrôleurs réalisent l'étape 606 de remontée au superviseur de réseau des requêtes de capacité globale, périodiquement ou en cas de variation importante de la charge sur le faisceau, à partir desquelles le superviseur va décider de redéfinir ou non le schéma d'attribution des ressources dans le réseau ; et
- au moins un terminal utilisateur, dont la position géographique guide l'appartenance à l'un ou l'autre des faisceaux satellitaires.

Dans un mode de réalisation de l'étape 605 du procédé selon l'invention exécuté sur un contrôleur de réseau, les terminaux appartenant à un sous-ensemble se verront affecter des ressources fréquentielles uniquement lors des intervalles temporels attribués spécifiquement à ce sous-ensemble de terminaux.

Dans un autre mode de réalisation du procédé selon l'invention exécuté sur un contrôleur de réseau, les terminaux appartenant à un sous-ensemble transmettent, c'est à dire émettent et reçoivent, en utilisant un schéma de modulation et de codage différent selon qu'ils utilisent les intervalles temporels attribués au sous-ensemble de terminaux ou ceux attribués à l'ensemble des terminaux d'un faisceau.

En effet, l'utilisation des ressources fréquentielles lors des intervalles temporels spécifiquement attribués à l'ensemble des terminaux du faisceau auquel il appartient peut être plus avantageux que l'utilisation des intervalles temporels attribués au sous-ensemble de terminaux, car durant les premiers intervalles temporels, ils bénéficient de rapports C/(N+I) plus favorables, du à la distance plus élevée entre les faisceaux utilisant des ressources fréquentielles identiques.

L'utilisation des intervalles temporels dans lesquels les ressources fréquentielles sont exclusivement attribuées à l'ensemble des terminaux d'un faisceau peut alors se faire en utilisant un schéma de modulation et de codage spectralement plus efficace que celui utilisé dans les deuxièmes intervalles temporels. Ce mode de réalisation permet alors de garantir une qualité de service minimum à ce terminal, même lorsque les conditions de propagation sont dégradées, comme par exemple en présence de pluie, les liaisons utilisant les premiers intervalles temporels étant alors plus robuste à une dégradation du rapport signal à bruit due aux dégradations du canal de propagation que les autres.

Dans ce cas, une boucle FMT (acronyme anglais pour Fade Mitigation Technique) pour l'utilisation chaque type de ressources fréquentielles peut être mise en place, de manière à choisir les schémas de modulation et de codage optimaux.

Les paramètres du schéma de modulation et de codage utilisé par les communications transmises vers ou depuis un terminal utilisateur sont des paramètres qu'un contrôleur en charge de la répartition de la charge au sein des faisceaux peut ajuster afin d'adapter les ressources à la charge du réseau.

Dans un autre mode de réalisation du procédé selon l'invention exécuté sur un contrôleur de réseau, les terminaux éligibles à l'utilisation des intervalles temporels attribués à un sous-ensemble de terminaux, utilisent une combinaison de ces intervalles temporels et des intervalles temporels attribués exclusivement à l'ensemble des terminaux d'un faisceau. Les données transmises sont entrelacées sur cette combinaison d'intervalles temporels, pour lesquels elles utilisent un schéma de modulation et de codage adapté, spectralement plus efficace lors des intervalles temporels attribués à l'ensemble des terminaux d'un faisceau, et spectralement moins efficace lors des autres intervalles temporels.

L'invention porte également sur un terminal utilisateur dans un réseau satellitaire dont les ressources sont attribuées selon l'invention.

La figure 7 représente les étapes d'un procédé de fonctionnement d'un terminal utilisateur dans un réseau satellitaire selon l'invention.

Lors de la première étape 701 du procédé mis en oeuvre au niveau d'un terminal utilisateur, celui-ci transmet au contrôleur des informations lui permettant de déterminer son appartenance au sous-ensemble de terminaux sans trop dégrader la qualité de sa transmission (la dégradation de la qualité de la transmission peut se mesurer en termes de taux d'erreur bits ou taux d'erreur paquets).

Ces informations peuvent être des informations géographiques d'une position, ou des niveaux de C/(N+I) calculés par le terminal lors d'une phase d'écoute de la porteuse, et comparés par le contrôleur à des critères d'éligibilité à l'utilisation de ces intervalles temporels. La mesure d'un taux d'erreur peut également être une information transmise au contrôleur. Cette mesure est réalisée une première fois lors de l'entrée du terminal utilisateur dans le réseau, puis à intervalles réguliers. Lors de son entrée dans le réseau, le terminal écoute une porteuse descendante qui saute sur plusieurs faisceaux. Il reçoit alors des trames (par exemples des trames transmises selon le standard DVB-S2 (acronyme anglais pour Digital Video Broadcasting - Satellite - Second Génération)) lui permettant d'évaluer un rapport signal sur bruit plus interféreur (C/(N+I)) pour l'utilisation de ces fréquences. Le contrôleur prend en compte ces informations lorsqu'il détermine l'ordonnancement du multiplexage temporel entre les différents terminaux utilisateurs.

La deuxième étape 702 du procédé mis en oeuvre au niveau des terminaux utilisateurs, consiste à utiliser les allocations temporelles, les ressources fréquentielles et le schéma de modulation/codage transmises par le contrôleur pour réaliser les émissions/réceptions.

Enfin, l'invention couvre un réseau satellitaire multifaisceaux dans son ensemble, comprenant un superviseur de réseau en charge de l'allocation des ressources temporelle et fréquentielles aux différents faisceaux selon un mode de réalisation du procédé de l'invention, un ou plusieurs contrôleurs de réseau distribués ou colocalisés avec le superviseur, et des terminaux utilisateurs.

## Revendications

1. Procédé d'allocation dynamique de ressources dans un réseau satellitaire comprenant au moins un satellite configuré pour former une pluralité de faisceaux satellitaires (401 à 404) et des terminaux, le procédé étant **caractérisé en ce qu'**il comprend des étapes exécutées par un superviseur de réseau :
• une première étape (601) de rassemblement des faisceaux en groupes de faisceaux (420, 430) à partir d'une information de charge globale de chacun des faisceaux,
• une deuxième étape (602) d'attribution de ressources fréquentielles à chacun des groupes de faisceaux,
• une troisième étape (603) de détermination, au sein des faisceaux d'un même groupe et des faisceaux de groupes différents partageant des ressources fréquentielles communes, de zones géographiques dans lesquelles ces ressources fréquentielles peuvent être utilisées simultanément,
• une quatrième étape (604), réalisée pour chacun des groupes de faisceaux à partir de la charge globale des faisceaux et des zones géographiques déterminées, de détermination d'une trame de saut (421), ladite trame de saut comprenant des premiers intervalles temporels (422, 424), dans lesquels les ressources fréquentielles sont attribuées à l'ensemble des terminaux d'un des faisceaux du groupe de faisceaux, et des deuxièmes intervalles temporels (423), dans lesquels les ressources fréquentielles sont attribuées à un sous-ensemble de terminaux d'au moins un faisceau du groupe de faisceaux,
et des étapes exécutées par au moins un contrôleur associé à au moins un des faisceaux satellitaires :
• une cinquième étape (605), réalisée pour chacun des faisceaux, d'identification dudit sous-ensemble de terminaux et d'allocation aux terminaux des ressources fréquentielles associées à des instants d'émission dans les intervalles temporels de la trame de saut,
• une sixième étape (606) de remontée au superviseur d'informations concernant la charge globale de chacun des faisceaux auquel il est associé.

2. Procédé d'allocation dynamique de ressources dans un réseau satellitaire selon la revendication précédente, dans lequel, durant les deuxièmes intervalles temporels (423), les ressources fréquentielles sont attribuées à un sous-ensemble de terminaux d'un seul des faisceaux du groupe de faisceaux.

3. Procédé d'allocation dynamique de ressources dans un réseau satellitaire selon l'une des revendications précédentes, dans lequel les trames de sauts (421, 431) de groupes de faisceaux partageant des ressources fréquentielles communes sont synchrones.

4. Procédé d'allocation dynamique de ressources dans un réseau satellitaire selon l'une des revendications précédentes, dans lequel la durée des trames de saut, le nombre d'intervalles temporels des trames de saut, et la position des intervalles temporels durant lesquels les ressources fréquentielles sont attribuées à un sous-ensemble de terminaux d'au moins un faisceau du groupe de faisceaux (423, 433), sont identiques pour des groupes de faisceaux partageant des ressources fréquentielles communes (420, 430).

5. Procédé d'allocation dynamique de ressources dans un réseau satellitaire selon l'une des revendications précédentes, dans lequel la cinquième étape (605) d'identification du sous-ensemble de terminaux est réalisée à partir de la position géographique des terminaux.

6. Procédé d'allocation dynamique de ressources dans un réseau satellitaire selon l'une des revendications 1 à 4, dans lequel la cinquième étape (605) d'identification du sous-ensemble de terminaux est réalisée en mesurant pour chaque terminal un rapport signal à bruit plus interféreur (C/(N+I)).

7. Procédé d'allocation dynamique de ressources dans un réseau satellitaire selon l'une des revendications précédentes, dans lequel lesdites première (601), deuxième (602), troisième (603) et quatrième (604) étapes sont réalisées périodiquement.

8. Procédé d'allocation dynamique de ressources dans un réseau satellitaire selon l'une des revendications précédentes, dans lequel lesdites première (601), deuxième (602) et troisième (603) et quatrième (604) étapes sont réalisées lorsqu'au moins un des faisceaux requiert un ajustement de sa capacité.

9. Superviseur de réseau dans un réseau satellitaire comprenant au moins un satellite configuré pour former une pluralité de faisceaux satellitaires (401 à 404) et des terminaux, **caractérisé en ce qu'**il est configuré pour réaliser la première étape (601), la deuxième étape (602), la troisième étape (603) et la quatrième étape (604) d'un procédé d'allocation dynamique de ressources selon l'une des revendications précédentes.

10. Contrôleur de réseau dans un réseau satellitaire comprenant au moins un satellite configuré pour former une pluralité de faisceaux satellitaires (401 à 404) et des terminaux, **caractérisé en ce qu'**il est associé à au moins un des faisceaux satellitaires et **en ce qu'**il est configuré pour réaliser la cinquième (605) et la sixième (606) étape d'un procédé d'allocation dynamique de ressources selon l'une des revendications 1 à 8 pour le ou les faisceaux auxquels il est associé.

11. Réseau satellitaire **caractérisé en ce qu'**il comprend :
• un superviseur de réseau selon la revendication 9,
• au moins un contrôleur de réseau selon la revendication 10, et
• au moins un terminal utilisateur.

## Patentansprüche

1. Verfahren für die dynamische Bereitstellung von Ressourcen in einem Satellitennetz, umfassend mindestens einen Satelliten, der konfiguriert ist, um eine Vielzahl von Satelliten-Strahlenbündeln (401 bis 404) zu bilden, und Endgeräte, wobei das Verfahren **dadurch gekennzeichnet ist, dass** es Schritte umfasst, die von einem Netz-Supervisor ausgeführt werden:
• einen ersten Schritt (601) des Zusammenstellens der Strahlenbündel in Strahlenbündelgruppen (420, 430) auf der Basis einer globalen Auslastungsinformation jedes der Strahlenbündel,
• einen zweiten Schritt (602) des Bereitstellens von Frequenzressourcen für jede der Strahlenbündelgruppen,
• einen dritten Schritt (603) des Bestimmens, innerhalb der Strahlenbündel einer selben Gruppe und Strahlenbündeln unterschiedlicher Gruppen, die sich gemeinsame Frequenzressourcen teilen, von geografischen Zonen, in denen diese Frequenzressourcen gleichzeitig verwendet werden können,
• einen vierten Schritt (604), der für jede der Strahlenbündelgruppen auf der Basis der globalen Auslastung der Strahlenbündel und der festgelegten geografischen Zonen durchgeführt wird, des Bestimmens eines Sprungrasters (421), wobei das Sprungraster erste Zeitintervalle (422, 424) umfasst, in denen die Frequenzressourcen allen Endgeräten eines Strahlenbündels der Strahlenbündelgruppe zugewiesen werden, und zweite Zeitintervalle (423), in welchen die Frequenzressourcen einer Endgeräteuntergruppe mindestens eines Strahlenbündels der Strahlenbündelgruppe zugewiesen werden,
und Schritte, die von mindestens einem Controller ausgeführt werden, der mindestens einem der Satelliten-Strahlenbündel zugewiesen ist:
• einen fünften Schritt (605), der für jedes der Strahlenbündel durchgeführt wird, des Identifizierens der Endgeräteuntergruppe und des Bereitstellens an die Endgeräte der Frequenzressourcen, die Sendezeitpunkten in den Zeitintervallen des Sprungrasters zugewiesen sind,
• einen sechsten Schritt (606) des Übertragens an den Supervisor von Informationen, welche die globale Auslastung jedes der Strahlenbündel betreffen, dem er zugeordnet ist.

2. Verfahren für die dynamische Bereitstellung von Ressourcen in einem Satellitennetz nach vorangehendem Anspruch, wobei, während der zweiten Zeitintervalle (423), die Frequenzressourcen einer Endgeräteuntereinheit eines einzigen der Strahlenbündel der Strahlenbündelgruppe bereitgestellt werden.

3. Verfahren für die dynamische Bereitstellung von Ressourcen in einem Satellitennetz nach einem der vorangehenden Ansprüche, wobei die Sprungraster (421, 431) von Strahlenbündelgruppen, die sich gemeinsame Frequenzressourcen teilen, synchron sind.

4. Verfahren für die dynamische Bereitstellung von Ressourcen in einem Satellitennetz nach einem der vorangehenden Ansprüche, wobei die Dauer der Sprungraster, die Anzahl von Zeitintervallen der Sprungraster und die Position der Zeitintervalle, in denen die Frequenzressourcen einer Endgeräteuntereinheit mindestens eines Strahlenbündels der Strahlenbündelgruppe (423, 433) zugewiesen werden, für Strahlenbündelgruppen identisch sind, die sich gemeinsame Frequenzressourcen (420, 430) teilen.

5. Verfahren für die dynamische Bereitstellung von Ressourcen in einem Satellitennetz nach einem der vorangehenden Ansprüche, wobei der fünfte Schritt (605) des Identifizierens der Endgeräteuntergruppe auf der Basis der geografischen Position der Endgeräte durchgeführt wird.

6. Verfahren für die dynamische Bereitstellung von Ressourcen in einem Satellitennetz nach einem der Ansprüche 1 bis 4, wobei der fünfte Schritt (605) des Identifizierens der Endgeräteuntergruppe durch Messen für jedes Endgerät eines Verhältnisses Signal zu Rauschen plus Störsignal (C/(N+I)) durchgeführt wird.

7. Verfahren für die dynamische Bereitstellung von Ressourcen in einem Satellitennetz nach einem der vorangehenden Ansprüche, wobei der erste (601), zweite (602), dritte (603) und vierte (604) Schritt periodisch durchgeführt werden.

8. Verfahren für die dynamische Bereitstellung von Ressourcen in einem Satellitennetz nach einem der vorangehenden Ansprüche, wobei der erste (601), zweite (602) und dritte (603) und vierte (604) Schritt durchgeführt werden, wenn mindestens eines der Strahlenbündel eine Angleichung seiner Kapazität verlangt.

9. Netz-Supervisor in einem Satellitennetz, umfassend mindestens einen Satelliten, der konfiguriert ist, um eine Vielzahl von Satelliten-Strahlenbündeln (401 bis 404) zu bilden, und Endgeräte, **dadurch gekennzeichnet, dass** er konfiguriert ist, um den ersten Schritt (601), den zweiten Schritt (602), den dritten Schritt (603) und den vierten Schritt (604) eines Verfahrens für die dynamische Bereitstellung von Ressourcen nach einem der vorangehenden Ansprüche durchzuführen.

10. Netz-Controller in einem Satellitennetz, umfassend mindestens einen Satelliten, der konfiguriert ist, um eine Vielzahl von Satelliten-Strahlenbündeln (401 bis 404) zu bilden, und Endgeräte, **dadurch gekennzeichnet, dass** er mindestens einem der Satelliten-Strahlenbündel zugeordnet ist und dass er konfiguriert ist, um den fünften (605) und den sechsten (606) Schritt eines Verfahrens für die dynamische Bereitstellung von Ressourcen nach einem der Ansprüche 1 bis 8 für das oder die Strahlenbündel durchzuführen, denen er zugeordnet ist.

11. Satellitennetz, **dadurch gekennzeichnet, dass** es umfasst:
• einen Netz-Supervisor nach Anspruch 9,
• mindestens einen Netz-Controller nach Anspruch 10, und
• mindestens ein Benutzerendgerät.

## Claims

1. Method for dynamically allocating resources in a satellite network comprising at least one satellite configured to form a plurality of satellite beams (401 to 404) and terminals, the method being **characterized in that** it comprises steps executed by a network supervisor:
• a first step (601) of clustering the beams into groups of beams (420, 430) on the basis of an item of information regarding overall loading of each of the beams,
• a second step (602) of allocating frequency resources to each of the groups of beams,
• a third step (603) of determining, within the beams of one and the same group and beams of different groups sharing common frequency resources, geographical zones in which these frequency resources can be used simultaneously,
• a fourth step (604), carried out for each of the groups of beams on the basis of the overall loading of the beams and the geographical zones determined, of determining a hop frame (421), the said hop frame comprising first timeslots (422, 424), in which the frequency resources are allocated to the whole set of terminals of one of the beams of the group of beams, and second timeslots (423), in which the frequency resources are allotted to a subset of terminals of at least one beam of the group of beams,
and steps executed by at least one controller which is associated with at least one of the satellite beams:
• a fifth step (605), carried out for each of the beams, of identifying the said subset of terminals and of allocating to the terminals frequency resources associated with instants of sending in the timeslots of the hop frame,
• a sixth step (606) of uploading to the supervisor information relating to the overall loading of each of the beams associated therewith.

2. Method for dynamically allocating resources in a satellite network according to the preceding claim, in which, during the second timeslots (423), the frequency resources are allocated to a subset of terminals of a single of the beams of the group of beams.

3. Method for dynamically allocating resources in a satellite network according to one of the preceding claims, in which the hop frames (421, 431) of groups of beams sharing common frequency resources are synchronous.

4. Method for dynamically allocating resources in a satellite network according to one of the preceding claims, in which the duration of the hop frames, the number of timeslots of the hop frames, and the position of the timeslots during which the frequency resources are allocated to a subset of terminals of at least one beam of the group of beams (423, 433), are identical for groups of beams sharing common frequency resources (420, 430).

5. Method for dynamically allocating resources in a satellite network according to one of the preceding claims, in which the fifth step (605) of identifying the subset of terminals is carried out on the basis of the geographical position of the terminals.

6. Method for dynamically allocating resources in a satellite network according to one of Claims 1 to 4, in which the fifth step (605) of identifying the subset of terminals is carried out by measuring for each terminal a signal-to-noise plus interferer ratio (C/(N+I)).

7. Method for dynamically allocating resources in a satellite network according to one of the preceding claims, in which the said first (601), second (602), third (603) and fourth (604) steps are carried out periodically.

8. Method for dynamically allocating resources in a satellite network according to one of the preceding claims, in which the said first (601), second (602) and third (603) and fourth (604) steps are carried out when at least one of the beams requires an adjustment of its capacity.

9. Network supervisor in a satellite network comprising at least one satellite configured to form a plurality of satellite beams (401 to 404) and terminals, **characterized in that** it is configured to carry out the first step (601), the second step (602), the third step (603) and the fourth step (604) of a method for dynamically allocating resources according to one of the preceding claims.

10. Network controller in a satellite network comprising at least one satellite configured to form a plurality of satellite beams (401 to 404) and terminals, **characterized in that** it is associated with at least one of the satellite beams and **in that** it is configured to carry out the fifth (605) and the sixth (606) step of a method for dynamically allocating resources according to one of Claims 1 to 8 for the beam or beams with which it is associated.

11. Satellite network **characterized in that** it comprises:
• a network supervisor according to Claim 9,
• at least one network controller according to Claim 10, and
• at least one user terminal.
